# EUROPEAN PATENT APPLICATION

(11) **EP 4 601 037 A1**
(43) Date of publication of application: **13.08.2025**
(21) Application number: 24875783.3
(22) Date of filing: 29.11.2024
(51) Int. Cl.: H01M 4/38, H01M 4/62

(54) **NEGATIVE ELECTRODE MATERIAL, NEGATIVE ELECTRODE SHEET AND BATTERY**

(30) Priority: 05.01.2024 CN 202410014552
(71) Applicant: BTR NEW MATERIAL GROUP CO., LTD., Shenzhen, Guangdong 518106 (CN)
(72) Inventor: LI, Xiaodong, Shenzhen, Guangdong 518106 (CN); HE, Peng, Shenzhen, Guangdong 518106 (CN); GUO, Eming, Shenzhen, Guangdong 518106 (CN); XIAO, Chengmao, Shenzhen, Guangdong 518106 (CN); REN, Jianguo, Shenzhen, Guangdong 518106 (CN)
(74) Representative: Novagraaf Technologies
(86) International application number: PCT/CN2024/135823
(87) International publication number: WO 2025/124177

(57) **Abstract**

Provided are anode material, negative electrode plate and battery. The anode material includes a carbon matrix and a silicon-based active substance; the anode material contains an alkali metal element, an alkaline earth metal element, and an oxygen element, the alkali metal element includes Na and/or K, and the alkaline earth metal element includes Mg and/or Ca; a mass content of the alkali metal element is A ppm, a mass content of the alkaline earth metal element is B ppm, and a mass content of the oxygen element is E%; and the anode material satisfies the following relationship: 1 × 10⁻⁵ ≤ (B/A) × E ≤ 5 × 10². The anode material provided in the present application can enhance the cycling stability of the anode material while increasing the specific capacity of the anode material.

## Description

The present application claims priority to Chinese Patent Application No. 202410014552.1 filed on January 5, 2024. The disclosure of which is hereby incorporated by reference in its entirety.

### Technical Field

The present application relates to the field of anode material technology, specifically to anode material, negative electrode plate and battery.

### Background

Lithium ion batteries have the advantages of high energy density, high cycle life, low environmental pollution, and no memory effect, and are therefore widely used in electric vehicles and consumer electronics products. In recent years, the rapid development of electric vehicles has led to an increasing demand for higher energy density lithium-ion batteries, which has prompted researchers to search for battery materials with higher energy density and better cycle performance. The positive and anode materials are the core of the battery, determining the working efficiency of the battery. At present, the commercialized anode material is graphite, whose capacity is close to the theoretical limit, and the extent of further improvement is limited. Therefore, there is an urgent need to develop a new generation of anode materials with high energy density. Silicon-based anode materials are widely regarded as the next generation of battery anode materials, with advantages such as high capacity, abundant sources, and relative safety.

Silicon negative electrodes are widely regarded as the next generation of battery anode materials, with advantages such as high capacity, abundant sources, and relative safety. However, there is a severe volume expansion effect in the cycling process of the silicon negative electrodes, which leads to material pulverization and breakage. The repeated volume changes of a silicon anode material during electrochemical cycling also cause an SEI film formed on the surface of a silicon material to continuously break and regenerate, resulting in the continuous consumption of lithium ions and ultimately leading to rapid capacity decay.

### Summary

The present application provides an anode material, a negative electrode plate, and a battery, which can improve the particle mechanical strength of the anode material, alleviate the volume expansion of the anode material, and enhance the cycling stability of the anode material while increasing the specific capacity of the anode material.

In a first aspect, the present application provides an anode material including a carbon matrix and a silicon-based active substance; the anode material contains an alkali metal element, an alkaline earth metal element, and an oxygen element, the alkali metal element includes Na and/or K, and the alkaline earth metal element includes Mg and/or Ca;
a mass content of the alkali metal element is A ppm, a mass content of the alkaline earth metal element is B ppm, and a mass content of the oxygen element is E; and
the anode material satisfies the following relationship: 1×10⁻⁵ ≤ (B/A) × E ≤ 5×10².

In a second aspect, the present application provides a negative electrode plate comprising the anode material of the first aspect of the present application.

In a third aspect, the present application provides a battery comprising the anode material of the first aspect of the present application or the negative electrode plate of the second aspect of the present application.

The technical solution of the present application has at least the following beneficial effects:
The anode material provided by present application includes a carbon matrix and a silicon-based active substance; the anode material contains an alkali metal element, an alkaline earth metal element, and an oxygen element; the alkali metal element includes Na and/or K, and the alkaline earth metal element includes Mg and/or Ca; a mass content of the alkali metal element is A ppm, a mass content of the alkaline earth metal element is B ppm, and a mass content of the oxygen element is E; and the anode material of the present application satisfies the following relationship: 1×10⁻⁵ ≤ (B/A) × E ≤ 5×10², and can improve the particle mechanical strength of the anode material, alleviate the volume expansion of the anode material, further reduce the gas production phenomenon of the anode material, and enhance the cycling stability of the anode material while increasing the specific capacity of the anode material. According to the inventor's speculation, a silicate may be present in the anode material. A silicate containing an alkaline earth metal element can enhance the mechanical strength of the silicon-based active substance, and has good thermal and structural stability, which can effectively alleviate the volume expansion of the silicon-based active substance. A silicate of an alkali metal element has water solubility. Although the silicate of the alkali metal element itself has low mechanical strength, it can serve as a binder to enhance the mechanical strength of the silicate containing the alkaline earth metal element, further alleviating the volume expansion of the anode material. According to the inventor's speculation, the oxygen content in the anode material can map the mass content of silicon oxide in the anode material. A suitable amount of silicon oxide on the surface of the silicon-based active substance can reduce the direct contact between the silicon-based active substance and an electrolyte, reduce the occurrence of side reactions, and reduce gas production. Therefore, the present application controls 1×10⁻⁵ ≤ (B/A) × E ≤ 5×10², which can balance the mass content of alkali metal silicate, alkaline earth metal silicate, and silicon oxide in the anode material, and can improve the particle mechanical strength of the anode material, alleviate the volume expansion of the anode material, further reduce the gas production phenomenon of the anode material, and enhance the cycling stability of the anode material while increasing the specific capacity of the anode material.

### Detailed Description of the Embodiments

To better illustrate the present application and facilitate understanding of the technical solution of the present application, the following provides a further detailed explanation of the present application. However, the following embodiments are only simple examples of the present application and do not represent or limit the scope of protection of the present application. The scope of protection of the present application shall be subject to the claims.

In a first aspect, an anode material provided by the present application including a carbon matrix and a silicon-based active substance; the anode material contains an alkali metal element, an alkaline earth metal element, and an oxygen element, the alkali metal element includes Na and/or K, and the alkaline earth metal element includes Mg and/or Ca;
a mass content of the alkali metal element is A ppm, a mass content of the alkaline earth metal element is B ppm, and a mass content of the oxygen element is E; and
the anode material satisfies the following relationship: 1 ×10⁻⁵ ≤ (B/A) × E ≤ 5×10².

The anode material provided the present application includes a carbon matrix and a silicon-based active substance. Specifically, the silicon-based active substance is loaded on the carbon matrix, and the anode material contains an alkali metal element, an alkaline earth metal element, and an oxygen element; the alkali metal element includes Na and/or K, and the alkaline earth metal element includes Mg and/or Ca; a mass content of the alkali metal element is A ppm, a mass content of the alkaline earth metal element is B ppm, and a mass content of the oxygen element is E; and the anode material of the present application satisfies the following relationship: 1 ×10⁻⁵ ≤ (B/A) × E ≤ 5×10², and can improve the particle mechanical strength of the anode material, alleviate the volume expansion of the anode material, further reduce the gas production phenomenon of the anode material, and enhance the cycling stability of the anode material while increasing the specific capacity of the anode material.

According to the inventor's speculation, a silicate may be present in the anode material. A silicate containing an alkaline earth metal element can enhance the mechanical strength of the silicon-based active substance, and has good thermal and structural stability, which can effectively alleviate the volume expansion of the silicon-based active substance. A silicate of an alkali metal element has water solubility. Although the silicate of the alkali metal element has low mechanical strength, it can serve as a binder to enhance the mechanical strength of the silicate containing the alkaline earth metal element. According to the inventor's speculation, the oxygen content in the anode material can map the mass content of silicon oxide in the anode material. A suitable amount of silicon oxide on the surface of the silicon-based active substance can reduce the direct contact between the silicon-based active substance and an electrolyte, reduce the occurrence of side reactions, and reduce gas production. The anode material of the present application satisfies: 1× 10⁻⁵ ≤ (B/A) × E ≤ 5×10², which can balance the mass content of alkali metal silicate, alkaline earth metal silicate, and silicon oxide in the anode material, and can improve the particle mechanical strength of the anode material, alleviate the volume expansion of the anode material, further reduce the gas production phenomenon of the anode material, and enhance the cycling stability of the anode material while increasing the specific capacity of the anode material. The above is only a reasonable speculation by the inventor, and it may also be caused by other reasons. In summary, the present application controls 1×10⁻⁵ ≤ (B/A) × E ≤ 5×10², within this range, it can improve the particle mechanical strength of the anode material, alleviate the volume expansion of the anode material, further reduce the gas production phenomenon of the anode material, and enhance the cycling stability of the anode material while increasing the specific capacity of the anode material.

In some embodiments, a mass content of the alkali metal element in the anode material is A ppm, 1 ≤ A ≤ 5000; and the specific values of A can be 1, 10, 50, 100, 200, 500, 800, 1000, 2000, 3000, 4000, or 5000, etc., and are not limited here. The inventor reasonably speculates that it is understandable to control the mass content of the alkali metal element in the anode material, namely the mass content of the alkali metal silicate. The alkali metal silicate such as sodium silicate and potassium silicate has water solubility and can be used as a binder to enhance the crack resistance of magnesium silicate and calcium silicate. Preferably, the mass content of the alkali metal element is 5 ppm ≤ A ppm ≤ 3000 ppm.

In some embodiments, a mass content of the alkaline earth metal element in the anode material is B ppm, 3 ≤ B ≤ 5000; and the specific values of B can be 3, 10, 50, 100, 200, 500, 800, 1000, 2000, 3000, 4000, or 5000, etc., and are not limited here. The inventor reasonably speculates that it is understandable to control the mass content of the alkaline earth metal element in the anode material, namely the mass content of the alkaline earth silicate, magnesium silicate and calcium silicate have excellent mechanical strength, and when magnesium silicate and calcium silicate are located on the surface of the silicon-based active substance, the mechanical strength of the silicon-based active substance can be improved, and the volume expansion of the silicon-based active substance can be alleviated. Preferably, the mass content of the alkaline earth metal element is 10 ppm ≤ A ppm ≤ 3000 ppm. More preferably, the mass content of the alkaline earth metal element is 500 ppm ≤ A ppm ≤ 3000 ppm. By optimizing the mass content of the alkaline earth metal element, the anode material has both good mechanical strength and elasticity, and is not easily broken, with good cycling stability.

In some embodiments, a mass content of the oxygen element in the anode material is E, 0.005 ≤ E ≤ 0.1; and the specific values of E can be 0.005 (i.e. 0.5%), 0.008, 0.01, 0.012, 0.015, 0.018, 0.02, 0.025, 0.03, 0.04, 0.05, 0.06, 0.08, or 0.1, etc., and are not limited here. Controlling the mass content of the oxygen element in the anode material can keep a silicon oxide layer on the surface of the silicon-based active substance within an appropriate range. The inventor reasonably speculates that the silicon oxide layer can work synergistically with a silicate layer to further alleviate the volume expansion of the silicon-based active substance during cycling process and improve the cycle performance of the anode material. Preferably, the mass content of the oxygen element is 0.01 ≤ E ≤ 0.08.

In some embodiments, 1×10⁻⁵ ≤ (B/A) ×E ≤ 5×10², which can specifically be 1×10⁻⁵, 1× 10⁻⁴, 1×10⁻³, 1×10⁻², 1×10⁻¹, 1, 10, 20, 50, 100, 5×10², etc., and is not limited here. Preferably, 1 ×10² ≤ (B/A) × E ≤ 50.

In some embodiments, the existence form of the alkaline earth metal element includes a silicate of alkaline earth metal and an oxide of alkaline earth metal. Specifically, the existence form of the alkaline earth metal element can be magnesium silicate and/or calcium silicate, calcium oxide and/or magnesium oxide.

In some embodiments, the existence form of the alkali metal element includes a silicate of alkali metal. Specifically, the existence form of the alkali metal element can be potassium silicate and/or sodium silicate.

In some embodiments, the carbon matrix includes at least one of hard carbon, soft carbon, graphite, mesocarbon microbeads, activated carbon, porous carbon, mesoporous carbon, and carbon gel.

In some embodiments, the silicon-based active substance includes at least one of elemental silicon, silicon oxide, silicon alloy, and silicon carbon composite. Specifically, the elemental silicon can be amorphous silicon, crystalline silicon, or a composite of crystalline silicon and amorphous silicon, and is not limited here. The silicon alloy can be silicon lithium alloy, silicon magnesium alloy, silicon nickel alloy, etc., and is not limited here. The silicon oxide includes silicon element and oxygen element, and an atomic ratio of the silicon element to the oxygen element is 0 to 2 and does not include 0, which is not limited here. A chemical formula of the silicon oxide is SiOₓ, wherein 0 < x ≤ 2, and is not specifically limited here.

In some embodiments, an average particle size of the silicon-based active substance is 0.1 nm to 500 nm, which can specifically be 0.1 nm, 1 nm, 5 nm, 10 nm, 50 nm, 100 nm, 150 nm, 200 nm, 300 nm, 350 nm, 400 nm, or 500 nm, etc., of course, the average particle size of the silicon-based active substance can also be other values within the above-mentioned range and is not limited here. The silicon-based active substance with a suitable size can improve the distribution uniformity between the silicon-based active substance and the carbon matrix, reduce the segregation phenomenon of the silicon-based active substance, and improve the cycle performance of the anode material. Preferably, an average particle size of the silicon-based active substance is 1 nm to 10 nm; and further preferably, an average particle size of the silicon-based active substance is 1 nm to 5 nm.

In some embodiments, a mass content of the silicon element in the silicon-based active substance is ≥ 99%. The mass content of the silicon element in the silicon-based active substance is within the above-mentioned range, which is beneficial for improving the purity of the silicon-based active substance and reducing impurities.

In some embodiments, the anode material further includes a carbon layer located on the surface of the anode material. It can be understood that the carbon layer reduces the volume expansion effect of the anode material to a certain extent, while enhancing the conductivity of the anode material; and the carbon layer can also reduce the direct contact between the silicon-based active substance and the electrolyte, suppress the excessive growth of a solid electrolyte interface (SEI) on the surface of the anode material, stabilize the interface of the anode material, and improve the first Coulombic efficiency of the anode material.

In some embodiments, the carbon layer includes at least one of graphitic carbon and amorphous carbon. The presence of the carbon layer on the surface of the active substance can improve the conductivity of the anode material, stabilize the interface of the anode material, reduce the direct contact between the silicon-based active substance and the electrolyte, reduce the occurrence of side reactions, and improve the rate performance and cycle performance of the anode material.

In some embodiments, a median particle size D₅₀ of the anode material is ≤ 15 µm, which can specifically be 0.5 µm, 1 µm, 2 µm, 5 µm, 10 µm, 11 µm, 12 µm, 13 µm, 14 µm, 15 µm, etc., of course, the median particle size D₅₀ of the anode material can also be other values within the above-mentioned range and is not limited here. It can be understood that controlling the median particle size of the anode material within the above-mentioned range is beneficial for improving the cycle performance of the anode material.

In some embodiments, the specific surface area of the anode material is ≤ 5 m²/g, which can specifically be 0.1 m²/g, 0.5 m²/g, 1 m²/g, 1.5 m²/g, 2 m²/g, 2.5 m²/g, 3 m²/g, 3.5 m²/g, 4 m²/g, 4.5 m²/g, or 5 m²/g, etc., of course, the specific surface area of the anode material can also be other values within the above-mentioned range and is not limited here. Controlling the specific surface area of the anode material within the above-mentioned range is beneficial for improving the first Coulombic efficiency and cycle performance of a lithium battery made from the anode material.

In some embodiments, the anode material includes a carbon matrix and a silicon-based active substance, and at least a portion of the surface of the silicon-based active substance is coated with a carbon layer. By setting the carbon layer, direct contact between the silicon-based active substance and the electrolyte can be reduced, which also helps alleviate volume expansion.

In some embodiments, when at least a portion of the surface of the silicon-based active substance is coated with a carbon layer, a mass ratio of silicon element and carbon element is (0.16 to 2):1. By regulating the mass ratio of the silicon element and the carbon element, it not only helps to improve the cycling stability of the anode material, but also enhances the capacity of the anode material.

In a second aspect, the present application provides a preparation method for an anode material, and the preparation method includes the following steps:
Step S10, compositing a carbon material with a silicon-based substance to obtain a composite;
Step S20, subjecting a mixture containing the composite, an alkali metal oxide, and an alkaline earth metal oxide to sintering treatment to obtain an anode material, wherein the alkali metal element includes at least one of Na and K, and the alkaline earth metal element includes at least one of Mg and Ca.

The method for preparing the anode material provided in the present application combines the carbon material with the silicon-based substance, which can improve the electronic conductivity of the anode material with the help of the carbon material and reduce the collapse of the material structure caused by volume expansion during insertion and extraction of lithium. Then, the composite is subjected to sintering treatment with the alkali metal oxide and the alkaline earth metal oxide. During the sintering process, an alkali metal silicate, an alkaline earth metal silicate, and a silicon oxide may be formed. A silicate containing an alkaline earth metal element can enhance the mechanical strength of the anode material, and has good thermal and structural stability, which can effectively alleviate the volume expansion of the anode material. Moreover, a silicate of an alkali metal element is water-soluble and can serve as a binder to enhance the mechanical strength of the silicate containing the alkaline earth metal element. The content of the oxygen element in anode material can map the mass content of the silicon oxide in the anode material. By controlling the mass content of the silicon oxide, the probability of side reactions between the anode material and the electrolyte can be reduced, and gas production can be reduced.

In some embodiments, the method for preparing the anode material further includes Step S30, wherein the product after the sintering treatment of S20 is used as a precursor, and the precursor is subjected to carbon coating treatment to obtain an anode material including a carbon matrix and a silicon-based active substance, and at least a portion of the surface of the silicon-based active substance in the anode material is coated with a carbon layer.

The carbon coating treatment of the precursor can further reduce the direct contact between the silicon-based active substance and the electrolyte. The anode material prepared by the preparation method of the present application has high particle mechanical strength, low volume expansion rate, and can effectively alleviate gas production phenomenon, with good cycling stability.

The following will provide a detailed explanation based on specific embodiments:
Step S10, compositing a carbon material with a silicon-based substance to obtain a composite.

In some embodiments, the carbon material includes at least one of hard carbon, soft carbon, graphite, mesocarbon microbeads, activated carbon, porous carbon, mesoporous carbon, and carbon gel.

In some embodiments, an average particle size of the carbon material is 1 µm to 15 µm, which can specifically be 1 µm, 2 µm, 3 µm, 4 µm, 5 µm, 6 µm, 7 µm, 8 µm, 10 µm, 12 µm, or 15 µm, etc., of course, the average particle size of the carbon material can also be other values within the above-mentioned range and is not limited here. It can be understood that controlling the average particle size of the carbon material within the above-mentioned range is beneficial for improving the cycle performance of the anode material.

In some embodiments, the carbon material has pores.

In some embodiments, an average pore size of the carbon material is 2 nm to 100 nm, which can specifically be 2 nm, 4 nm, 5 nm, 10 nm, 20 nm, 30 nm, 40 nm, 50 nm, 60 nm, 80 nm, or 100 nm, etc., of course, the average pore size of the carbon material can also be other values within the above-mentioned range and is not limited here.

In some embodiments, the method of combining the carbon material with the silicon-based substance includes at least one of vapor deposition, solid-phase fusion, and liquid-phase combining.

In some embodiments, the step of combining the carbon material with the silicon-based substance includes: using a silicon source gas to vapor deposit on the carbon material to obtain a composite.

In some embodiments, the silicon source gas includes at least one of silane, monochlorosilane, and dichlorosilane.

In some embodiments, a gas flow rate of the silicon source gas is 50 sccm-200 sccm, which can specifically be 50 sccm, 80 sccm, 90 sccm, 100 sccm, 120 sccm, 150 sccm, 180 sccm, or 200 sccm, etc., but it is not limited to the listed values, and other values not listed within this range are also applicable.

In some embodiments, a deposition time of the vapor deposition is 1 h to 15 h, which can specifically be 1 h, 3 h, 5 h, 6 h, 8 h, 10 h, 12 h, or 15 h, etc., and is not limited here.

In some embodiments, a deposition temperature of the vapor deposition is 300°C to 800°C, which can specifically be 300°C, 350°C, 400°C, 500°C, 600°C, 650°C, 700°C, or 800°C, etc., of course, the deposition temperature of the vapor deposition can also be other values within the above-mentioned range and is not limited here. It can be understood that controlling the temperature of the vapor deposition within the above-mentioned range is beneficial for controlling the crystal form of the silicon-based active substance, reducing the crystallinity of the silicon-based active substance, reducing the conversion of the amorphous silicon to the crystalline silicon, thereby reducing the volume expansion of the anode material and improving the cycle performance of the anode material.

In some embodiments, the step of combining the carbon material with the silicon-based substance includes: mixing the carbon material, silicon particles, and a solvent for dispersion treatment, removing the solvent to obtain a composite.

In some embodiments, a mass ratio of the silicon particles and the carbon material is (80 to 200):100, which can specifically be 80:100, 100:100, 120:100, 140:100, 150:100, 180:100, or 200:100, etc., of course, the mass ratio of the silicon particles to the carbon material can also be other values within the above-mentioned range, and is not limited here.

In some embodiments, the solvent includes at least one of water, methanol, ethanol, ethylene glycol, propanol, isopropanol, glycerol, n-butanol, isobutanol, pentanol, and ethyl acetate.

In some embodiments, the mixture further includes a dispersant, which includes at least one of stearic acid, sodium stearate, zinc stearate, magnesium stearate, calcium stearate, polyvinylpyrrolidone, carboxymethyl cellulose, and polyacrylic acid.

In some embodiments, based on a mass of 100 wt% of the carbon material, a mass ratio of the dispersant is 3 wt% to 8 wt%, which can specifically be 3 wt%, 4 wt%, 5 wt%, 6 wt%, 7 wt%, or 8 wt%, etc., and is not limited here. The addition of an appropriate amount of the dispersant in the mixture can improve the dispersion of the silicon particles in the mixture, reduce the agglomeration of the silicon particles, and thereby enhance the dispersion of the silicon particles in the precursor.

In some embodiments, the dispersion treatment includes at least one of mechanical stirring, ultrasonic dispersion, and grinding dispersion. Preferably, the grinding dispersion is used to disperse the silicon particles, avoiding their aggregation and enabling them to disperse into smaller nanoparticles.

In some embodiments, the method of removing the solvent includes drying treatment.

In some embodiments, a temperature of the drying treatment is 40°C to 200°C, which can specifically be 40°C, 50°C, 80°C, 100°C, 120°C, 150°C, 180°C, 190°C, or 200°C, etc. A time of the drying treatment is 1 h to 15 h, which can specifically be 1 h, 3 h, 5 h, 7 h, 9 h, 10 h, 12 h, or 15 h, etc. The drying treatment method can be oven drying, freeze drying, stirring evaporation drying, spray drying, etc. The drying treatment in the present embodiment can remove the solvent in a precursor solution as much as possible.

Step S20, subjecting a mixture containing the composite, an alkali metal oxide, and an alkaline earth metal oxide to sintering treatment to obtain a precursor, wherein the alkali metal element includes at least one of Na and K, and the alkaline earth metal element includes at least one of Mg and Ca.

In some embodiments, based on a mass of 100 wt% of the composite, the amount of the alkali metal oxide added is 1×10⁻³ wt% to 1.5 wt%, which can specifically be 1x10⁻³ wt%, 5×10⁻³ wt%, 1 ×10⁻² wt%, 5×10⁻² wt%, 0.1 wt%, 0.2 wt%, 0.4 wt%, 0.5 wt%, 0.7 wt%, 0.8 wt%, 1.0 wt%, 1.2 wt%, 1.4 wt%, or 1.5 wt%, etc., of course, the amount of the alkali metal oxide added can also be other values within the above-mentioned range and is not limited here.

In some embodiments, based on a mass of 100 wt% of the composite, the amount of the alkaline earth metal oxide added is 1.5×10⁻⁴ wt% to 1 wt%, which can specifically be 1.5×10⁻⁴ wt%, 1×10⁻³ wt%, 5×10⁻³ wt%, 1 × 10⁻² wt%, 5 × 10⁻² wt%, 0.1 wt%, 0.2 wt%, 0.4 wt%, 0.5 wt%, 0.7 wt%, 0.8 wt%, or 1 wt%, etc., of course, the amount of the alkaline earth metal oxide added can also be other values within the above-mentioned range and is not limited here.

In some embodiments, a temperature of the sintering treatment is 500°C to 800°C, which can specifically be 500°C, 550°C, 600°C, 650°C, 700°C, 750°C, or 800°C, etc., of course, the temperature of the sintering treatment can also be other values within the above-mentioned range and is not limited here.

In some embodiments, a holding time of the sintering treatment is 2 h to 10 h, which can specifically be 2 h, 3 h, 5 h, 6 h, 8 h, 9 h, or 10 h, etc., of course, the holding time of the sintering treatment can also be other values within the above-mentioned range and is not limited here.

In some embodiments, a heating rate of the sintering treatment is 2°C/min to 10°C/min, which can specifically be 2°C/min, 4°C/min, 5°C/min, 6°C/min, 8°C/min, 9°C/min, or 10°C/min, etc., and is not limited here.

In some embodiments, the sintering treatment is carried out under a protective atmosphere, which includes at least one of nitrogen gas, argon gas, helium gas, and neon gas.

Step S30, the precursor is subjected to carbon coating treatment to obtain an anode material.

In some embodiments, the carbon coating treatment includes at least one of solid-phase carbon coating, liquid-phase carbon coating, and gas-phase carbon coating.

It can be understood that the carbon coating treatment of the precursor can form a carbon layer on at least a portion of the surface of the silicon-based active substance, which can reduce the direct contact between the anode material and the electrolyte, reduce the occurrence of side reactions between the anode material and the electrolyte, and thereby improve the electrochemical performance of the anode material; on the other hand, it can also alleviate the mechanical stress caused by the volume expansion of the anode material, improve the structural stability of the anode material, enhance interface stability, and thereby improve the cycle performance of the anode material.

In some embodiments, the steps of the carbon coating treatment specifically include: heating the precursor, introducing a protective gas and a carbon source gas, and thermally cracking the carbon source gas to obtain an anode material with a carbon layer on the surface.

In some embodiments, the carbon source gas is a hydrocarbon.

In some embodiments, the carbon source gas includes at least one of methane, ethylene, acetylene, propyne, propylene, propane, toluene, benzene, styrene, and phenol.

In some embodiments, a flow rate of the carbon source gas is 50 sccm to 200 sccm, which can specifically be 50 sccm, 80 sccm, 90 sccm, 100 sccm, 120 sccm, 150 sccm, 180 sccm, or 200 sccm, etc., but it is not limited to the listed values, and other values not listed within this range are also applicable.

In some embodiments, a pressure of the thermal cracking is 10 Torr to 100 Torr, which can specifically be 10 Torr, 15 Torr, 20 Torr, 30 Torr, 50 Torr, 60 Torr, 70 Torr, or 100 Torr, etc., but it is not limited to the listed values, and other values not listed within this range are also applicable.

In some embodiments, a temperature of the thermal cracking is 600°C to 1000°C, and a time of the thermal cracking is 0.5 h to 24 h.

Specifically, the temperature of the thermal cracking can be 600°C, 620°C, 650°C, 680°C, 700°C, 760°C, 870°C, 900°C, 920°C, 950°C, 980°C, or 1000°C, etc., and is not limited here. The time of the thermal cracking can specifically be 0.5 h, 1 h, 3 h, 5 h, 8 h, 12 h, 15 h, 18 h, 20 h, 22 h, or 24 h, etc., and is not limited here.

In some embodiments, a heating rate of the thermal cracking is 2°C/min to 10°C/min, which can specifically be 2°C/min, 4°C/min, 5°C/min, 6°C/min, 8°C/min, 9°C/min, or 10°C/min, etc., and is not limited here.

In the present application, controlling the temperature, time, pressure, and other parameters of the thermal cracking helps to evenly deposit the carbon source gas on the surface of the precursor, further reducing the direct contact between the silicon-based active substance and the electrolyte, reducing the probability of side reactions between the anode material and the electrolyte, and thereby improving the electrochemical performance of the anode material.

In some embodiments, the step of the carbon coating treatment specifically includes: subjecting a mixture obtained by mixing the precursor with a solid-phase carbon source to carbonization treatment to obtain an anode material.

In some embodiments, a temperature of the carbonization treatment is 500°C to 1000°C, and a time of the carbonization treatment is 30 min to 24 h.

Specifically, a temperature of the carbonization treatment can be 500°C, 540°C, 580°C, 600°C, 620°C, 650°C, 680°C, 700°C, 760°C, 870°C, 900°C, 920°C, 950°C, 980°C, or 1000°C, etc., and is not limited here. A time of the carbonization treatment can specifically be 30 min, 1 h, 3 h, 5 h, 8 h, 12 h, 15 h, 18 h, 20 h, 22 h, or 24 h, etc., and is not limited here.

In some embodiments, the solid-phase carbon source includes at least one of a sugar, an ester, a hydrocarbon, an organic acid, and a high molecular polymer.

In some embodiments, the solid-phase carbon source includes at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin.

In some embodiments, a mass ratio of the solid-phase carbon source and the precursor is (1 to 200):100, which can specifically be 1:100, 2:100, 5:100, 10:100, 50:100, 100:100, 150:100, 180:100, or 200:100, etc., and is not limited here.

In some embodiments, the step of the carbon coating treatment specifically includes: subjecting a mixture obtained by mixing the precursor with a liquid-phase carbon source to carbonization treatment to obtain an anode material.

In some embodiments, a mass ratio of the liquid-phase carbon source and the precursor is (1 to 200):100, which can specifically be 1:100, 2:100, 5:100, 10:100, 50:100, 100:100, 150:100, 180:100, or 200:100, etc., and is not limited here.

In some embodiments, the liquid-phase carbon source includes at least one of n-hexane, toluene, benzene, xylene, methanol, ethanol, propanol, butanol, pentanol, acetone, butanone, 2-pentanone, methyl acetate, ethyl acetate, propyl acetate, butyl acetate, and pentyl acetate.

In some embodiments, a temperature of the carbonization treatment is 600°C to 1200°C, and a time of the carbonization treatment is 2 h to 20 h. Specifically, a temperature of the carbonization treatment can be 600°C, 620°C, 650°C, 680°C, 700°C, 760°C, 870°C, 900°C920, 950, 980°C, 1000°C, 1020°C, 1080°C, 1100°C, 1160°C, or 1200°C, etc., and is not limited here. A time of the carbonization treatment can specifically be 2 h, 3 h, 5 h, 8 h, 12 h, 15 h, 18 h, 20 h, 22 h, 24 h, 25 h, 26 h, 28 h, or 30 h, etc., and is not limited here.

In some embodiments, the carbon coating treatment is carried out under a protective atmosphere, which includes at least one of nitrogen gas, helium gas, neon gas, argon gas, and krypton gas.

In some embodiments, a method for preparing the anode material further includes: carrying out shaping treatment, sieving, and grading to a product of the carbon coating treatment to obtain an anode material with a carbon layer on the surface, wherein the shaping treatment includes at least one of crushing, grinding, ball milling, and gas crushing.

In a third aspect, the present application provides a negative electrode plate including the anode material of the first aspect or the anode material prepared by the preparation method of the second aspect.

In a fourth aspect, the present application provides a battery including the anode material of the first aspect, the anode material prepared by the preparation method of the second aspect, or the negative electrode plate of the third aspect. The battery can be a lithium ion battery or a sodium ion battery, etc., and is not limited here.

The above are only the preferred embodiments of the present application and are not intended to limit the present application. Any modification, equivalent replacement, improvement and the like made within the spirit and principle of the present application shall be still included in the protection scope of the present application.

### Example 1

A method for preparing an anode material in the present example included the following steps:
(1) a carbon material was a porous carbon with D₅₀ = 10 µm and a pore size of 2 nm to 100 nm (an average pore size of the carbon material was 5 nm); the carbon material was placed in a CVD reaction chamber, the reaction chamber was repeatedly blown with nitrogen gas (3 to 5 times), the nitrogen gas was turned off and argon gas was introduced at a flow rate of 400 sccm, the temperature was raised to 500°C at a rate of 10°C/min and stayed at this temperature for 1 hour, the argon gas was turned off and high-purity silane gas was introduced (99.9999%) at a flow rate of 100 sccm, the speed was controlled at 10 rpm, kept for 3 hours, then the silane gas was turned off, argon gas was introduced, cooled down to room temperature, and a material was received to obtain a composite.
(2) Based on a mass of 100 wt% of the composite, sodium oxide with a mass ratio of 1.5 wt% and magnesium oxide with a mass ratio of 0.0003 wt% were added and mixed with the composite. After uniform mixing, the mixture was placed in a box furnace and heated to 600°C at 10°C/min and stayed at this temperature for 5 hours for sintering treatment to obtain a precursor.
(3) The precursor was placed in the CVD reaction chamber and the argon gas was introduced at a flow rate of 400 sccm, the temperature was raised to 600°C at a rate of 10°C/min and stayed at this temperature for 1 hour, the argon gas was turned off and ethylene gas was introduced at a flow rate of 100 sccm, the speed was controlled at 10 rpm, a pressure was 10 Torr, kept for 0.5 hour, then the ethylene gas was turned off, argon gas was introduced, cooled down to room temperature, and then crushed and sieved to obtain an anode material.

The anode material produced in the example of the present application included a carbon matrix and a silicon-based active substance loaded on the carbon matrix, and the surface of at least a portion of the silicon-based active substance was coated with a carbon layer; and the silicon-based active substance included amorphous silicon. The other parameters of the anode material were detailed in Table 1.

### Example 2

The difference from Example 1 was that:
(2) Based on a mass of 100 wt% of a composite, magnesium oxide with a mass ratio of 0.06 wt% and sodium oxide with a mass ratio of 0.03 wt% were added and mixed with the composite. After uniform mixing, the mixture was placed in a box furnace and heated to 600°C at 10°C/min and stayed at this temperature for 5 hours for sintering treatment to obtain a precursor.

### Example 3

The difference from Example 1 was that:
(2) Based on a mass of 100 wt% of a composite, magnesium oxide with a mass ratio of 0.3 wt% and sodium oxide with a mass ratio of 0.0015 wt% were added and mixed with the composite. After uniform mixing, the mixture was placed in a box furnace and heated to 600°C at 10°C/min and stayed at this temperature for 5 hours for sintering treatment to obtain a precursor.

### Example 4

The difference from Example 1 was that:
(2) Based on a mass of 100 wt% of a composite, magnesium oxide with a mass ratio of 0.3 wt% and sodium oxide with a mass ratio of 0.00015 wt% were added and mixed with the composite. After uniform mixing, the mixture was placed in a box furnace and heated to 600°C at 10°C/min and stayed at this temperature for 5 hours for sintering treatment to obtain a precursor.

### Example 5

The difference from Example 1 was that:
(2) Based on a mass of 100 wt% of a composite, magnesium oxide with a mass ratio of 1.4 wt% and sodium oxide with a mass ratio of 0.0007 wt% were added and mixed with the composite. After uniform mixing, the mixture was placed in a box furnace and heated to 600°C at 10°C/min and stayed at this temperature for 5 hours for sintering treatment to obtain a precursor.

### Example 6

(1) A carbon material was an artificial graphite with D₅₀ = 12 µm and an average pore size of 5 nm; the artificial graphite and nano silicon (a mass content of oxygen element in the nano silicon is 0.5%) with a mass ratio of 100:120 was added into a solvent, and polyacrylic acid (a mass of the artificial graphite is 100%) with a mass ratio of 5% was added, fully stirred for 10 min, and performed spray drying and granulating to obtain a composite.
(2) Based on a mass of 100 wt% of the composite, potassium oxide with a mass ratio of 1.5 wt% and calcium oxide with a mass ratio of 0.0003 wt% were added and mixed with the composite. After uniform mixing, the mixture was placed in a box furnace and heated to 800°C at 10°C/min and stayed at this temperature for 5 hours for sintering treatment to obtain a precursor.
(3) The precursor was mixed with asphalt (D₅₀ = 5 µm) in a mass ratio of 3:1, placed in a box furnace, nitrogen gas was introduced, the temperature was raised to 750°C at a rate of 10°C/min and held for 3 h, cooled naturally down to room temperature, and then crushed and sieved to obtain an anode material.

### Example 7

The difference from Example 6 was that:
(1) A carbon material was an artificial graphite with D₅₀ = 12 µm and an average pore size of 10 nm; the artificial graphite and nano silicon (a mass content of oxygen element in the nano silicon is 3.5% to 4%) with a mass ratio of 100:120 was added into a solvent, and polyacrylic acid (a mass of the artificial graphite is 100%) with a mass ratio of 5% was added, fully stirred for 10 min, and performed spray drying and granulating to obtain a composite.
(2) Based on a mass of 100 wt% of the composite, calcium oxide with a mass ratio of 0.06 wt% and potassium oxide with a mass ratio of 0.03 wt% were added and mixed with the composite. After uniform mixing, the mixture was placed in a box furnace and heated to 800°C at 10°C/min and stayed at this temperature for 5 hours for sintering treatment to obtain a precursor.

### Example 8

The difference from Example 6 was that:
(1) A carbon material was an artificial graphite with D₅₀ = 12 µm and an average pore size of 20 nm; the artificial graphite and nano silicon (a mass content of oxygen element in the nano silicon is 8% to 9%) with a mass ratio of 100:120 was added into a solvent, and polyacrylic acid (a mass of the artificial graphite is 100%) with a mass ratio of 5% was added, fully stirred for 10 min, and performed spray drying and granulating to obtain a composite.
(2) Based on a mass of 100 wt% of the composite, calcium oxide with a mass ratio of 0.3 wt% and potassium oxide with a mass ratio of 0.0015 wt% were added and mixed with the composite. After uniform mixing, the mixture was placed in a box furnace and heated to 800°C at 10°C/min for 5 hours for sintering treatment to obtain a precursor.

### Example 9

The difference from Example 6 was that:
(1) A carbon material was an artificial graphite with D₅₀ = 12 µm and an average pore size of 10 nmnm; the artificial graphite and nano silicon (a mass content of oxygen element in the nano silicon is 14% to 15%) with a mass ratio of 100:120 was added into a solvent, and polyacrylic acid (a mass of the artificial graphite is 100%) with a mass ratio of 5% was added, fully stirred for 10 min, and performed spray drying and granulating to obtain a composite.
(2) Based on a mass of 100 wt% of the composite, calcium oxide with a mass ratio of 0.3 wt% and potassium oxide with a mass ratio of 0.00015 wt% were added and mixed with the composite. After uniform mixing, the mixture was placed in a box furnace and heated to 800°C at 10°C/min and stayed at this temperature for 5 hours for sintering treatment to obtain a precursor.

### Example 10

The difference from Example 6 was that:
(1) A carbon material was an artificial graphite with D₅₀ = 12 µm and an average pore size of 10 nm; the artificial graphite and nano silicon (a mass content of oxygen element in the nano silicon is 14% to 15%) with a mass ratio of 100:120 was added into a solvent, and polyacrylic acid (a mass of the artificial graphite is 100%) with a mass ratio of 5% was added, fully stirred for 10 min, and performed spray drying and granulating to obtain a composite.
(2) Based on a mass of 100 wt% of the composite, calcium oxide with a mass ratio of 5 wt% and potassium oxide with a mass ratio of 0.0005 wt% were added and mixed with the composite. After uniform mixing, the mixture was placed in a box furnace and heated to 800°C at 10°C/min and stayed at this temperature for 5 hours for sintering treatment to obtain a precursor.

### Example 11

The difference from Example 1 was that:
(2) Based on a mass of 100 wt% of a composite, magnesium oxide with a mass ratio of 0.29 wt% and sodium oxide with a mass ratio of 0.0015 wt% were added and mixed with the composite. After uniform mixing, the mixture was placed in a box furnace and heated to 600°C at 10°C/min and stayed at this temperature for 5 hours for sintering treatment to obtain a precursor.

### Example 12

The difference from Example 1 was that:
(2) Based on a mass of 100 wt% of a composite, magnesium oxide with a mass ratio of 1.3 wt% and sodium oxide with a mass ratio of 0.0006 wt% were added and mixed with the composite. After uniform mixing, the mixture was placed in a box furnace and heated to 600°C at 10°C/min and stayed at this temperature for 5 hours for sintering treatment to obtain a precursor.

### Example 13

The difference from Example 1 was that:
(2) Based on a mass of 100 wt% of the composite, sodium oxide with a mass ratio of 1.5 wt% and magnesium oxide with a mass ratio of 0.00028 wt% were added and mixed with the composite. After uniform mixing, the mixture was placed in a box furnace and heated to 600°C at 10°C/min and stayed at this temperature for 5 hours for sintering treatment to obtain a precursor.

### Comparative Example 1

The difference from Example 1 was that:
(2) Based on a mass of 100 wt% of the composite, sodium oxide with a mass ratio of 5 wt% and magnesium oxide with a mass ratio of 0.003 wt% were added and mixed with the composite. After uniform mixing, the mixture was placed in a box furnace and heated to 600°C at 10°C/min and stayed at this temperature for 5 hours for sintering treatment to obtain a precursor.

### Comparative Example 2

The difference from Example 1 was that:
(2) Based on a mass of 100 wt% of a composite, magnesium oxide with a mass ratio of 2.5 wt% and sodium oxide with a mass ratio of 0.00025 wt% were added and mixed with the composite. After uniform mixing, the mixture was placed in a box furnace and heated to 600°C at 10°C/min and stayed at this temperature for 5 hours for sintering treatment to obtain a precursor.

### Comparative Example 3

The difference from Example 6 was that:
(1) A carbon material was an artificial graphite with D₅₀ = 12 µm and an average pore size of 10 nm; the artificial graphite and nano silicon (a mass content of oxygen element in the nano silicon is 0.4%) with a mass ratio of 100:120 was added into a solvent, and polyacrylic acid (a mass of the artificial graphite is 100%) with a mass ratio of 5% was added, fully stirred for 10 min, and performed spray drying and granulating to obtain a composite.
(2) Based on a mass of 100 wt% of the composite, potassium oxide with a mass ratio of 5 wt% and calcium oxide with a mass ratio of 0.003 wt% were added and mixed with the composite. After uniform mixing, the mixture was placed in a box furnace and heated to 800°C at 10°C/min and stayed at this temperature for 5 hours for sintering treatment to obtain a precursor.

### Comparative Example 4

The difference from Example 6 was that:
(1) A carbon material was an artificial graphite with D₅₀ = 12 µm and an average pore size of 10 nm; the artificial graphite and nano silicon (a mass content of oxygen element in the nano silicon is 11%) with a mass ratio of 100:120 was added into a solvent, and polyacrylic acid (a mass of the artificial graphite is 100%) with a mass ratio of 5% was added, fully stirred for 10 min, and performed spray drying and granulating to obtain a composite.
(2) Based on a mass of 100 wt% of the composite, calcium oxide with a mass ratio of 6 wt% and potassium oxide with a mass ratio of 0.0006 wt% were added and mixed with the composite. After uniform mixing, the mixture was placed in a box furnace and heated to 800°C at 10°C/min and stayed at this temperature for 5 hours for sintering treatment to obtain a precursor.

### Testing method:

(1) Testing method for the specific surface area of the anode material:
   The specific surface area was measured using the TriStar 3000 specific surface area and pore size analyzer equipment from Micromeritics of the United States.
(2) Mass content testing of an alkaline earth metal element and an alkali metal element in the anode material:
   Using the testing equipment model PEoptima 8000ICP, a mass content of sodium (Na), potassium (K), magnesium (Mg), and calcium (Ca) in the anode material was tested by emission spectroscopy.
(3) Mass content testing of an oxygen element in the anode material:
   The hydrogen oxygen nitrogen analyzer, Eltra ONH2000, was used to measure the N and O elements in the material, with the testing standard being ISO 17053:2005.
(4) Mass content testing of a silicon element in the anode material:
   The measurement was carried out using the testing method for silicon content in GBT 38823-2020 of the national standard "Silicon-carbon";
(5) Mass content testing of a carbon element in the anode material:
   Using an infrared carbon sulfur analyzer: Eltra CS-i to measure the C element in the material;
(6) Testing method for a particle size of a silicon-based active substance:
   Silicon-based active substance particles were observed through a field emission scanning electron microscopy, a particle size of 50 silicon-based active substance particles was directly measured using a scale bar, and an average particle size was taken as a final average particle size of silicon-based active substance particles.
(7) Testing method for a particle size of the anode material: Using the Malvern laser particle size analyzer MS3000, based on the principle that the scattered light intensity distribution generated by particles in various directions depended on the size of the particles, large particles had small scattering angles, and small particles had large scattering angles. Therefore, the particle size distribution could be obtained by using the scattered light intensity distribution of laser diffraction. The testing conditions were as follows:
   ①Refractive index: 2.61; absorption rate: 0.1; refractive index of pure water and solvent: 1.33;
   ②Select "Continuous" for the internal ultrasound intensity mode, with an internal ultrasound intensity of 20%; stirring speed: 2500 r/min; background testing time: 15 s; sample testing time: 15 s;
   ③Select "Analysis Model" and "General" for data processing;
   ④The shading degree was tested to be 8% to 12%.
(8) Electrochemical performance testing

The anode materials prepared by the examples and the comparative examples were dissolved in N-methylpyrrolidone in a mass ratio of 94:1:5, with carboxymethyl cellulose and styrene butadiene rubber, and a solid content controlled at 50%, coated on a copper foil current collector and vacuum dried to obtain a negative electrode plate; and a 18650 cylindrical single cell battery was assembled using a ternary positive electrode plate (NCM523), 1 mol/L lithium hexafluorophosphate LiPF₆/(ethylene carbonate EC + dimethyl carbonate DMC + methyl ethyl carbonate EMC) (v/v=1:1:1) electrolyte, a Celgard2400 separator, and a shell using a conventional production process. The charging and discharging testing of the cylindrical battery was conducted on a LAND battery testing system at room temperature with a constant current of 0.2 C, and the charging and discharging voltage was limited to 2.75 V to 4.2 V. A first reversible capacity, a first cycle charging capacity, and a first cycle discharging capacity were obtained. First Coulombic efficiency = first cycle discharging capacity/first cycle charging capacity. 50 cycles were repeated and the discharging capacity was recorded as the remaining capacity of a lithium ion battery; capacity retention rate = remaining capacity/initial capacity×100%.

The performance testing results of Example 1 to Example 13 (abbreviated as S1 to S13) and Comparative Example 1 to Comparative Example 4 (abbreviated as D1 to D4) were shown in Tables 1 to 2:

**Table 1**

| Sample | Alkaline earth metal B (ppm) | Alkali metal A (ppm) | E | (B/A) × E | Median particle size of anode material (µm) | Specific surface area of anode material (m²/g) | Average particle size of silicon-based active substance (nm) | Mass ratio of silicon element and carbon element |
|---|---|---|---|---|---|---|---|---|
| S1 | 5 | 1989 | 0.02 | 5×10⁻⁵ | 10.9 | 2.0 | 4 | 1.1 |
| S2 | 996 | 402 | 0.02 | 0.05 | 11.4 | 1.8 | 5 | 1.0 |
| S3 | 2985 | 20 | 0.021 | 3.13 | 11.1 | 2.1 | 4 | 1.1 |
| S4 | 2899 | 1 | 0.021 | 60.88 | 10.7 | 2.2 | 4 | 1.1 |
| S5 | 4900 | 1 | 0.1 | 490 | 11.5 | 1.7 | 3 | 1.1 |
| S6 | 4.9 | 4051 | 0.005 | 6×10⁻⁵ | 12.5 | 1.2 | 95 | 1.1 |
| S7 | 1000 | 400 | 0.02 | 0.05 | 12.6 | 1.1 | 92 | 1.0 |
| S8 | 2810 | 28 | 0.025 | 2.51 | 12.9 | 2.1 | 89 | 0.9 |
| S9 | 3005 | 5 | 0.051 | 30.65 | 13.1 | 1.8 | 98 | 1.1 |
| S10 | 4886 | 50 | 0.1 | 9.77 | 13.5 | 1.6 | 101 | 1.0 |
| S11 | 3077.3 | 19.9 | 0.02 | 3.09 | 11.2 | 1.6 | 5 | 1.0 |
| S12 | 5000.0 | 1.0 | 0.09 | 436.5 | 11.5 | 2.0 | 4 | 1.1 |
| S13 | 4.8 | 2046.3 | 0.02 | 4.7×10⁻⁵ | 11.3 | 1.9 | 3 | 1.0 |
| D1 | 50 | 2×10⁵ | 0.02 | 5×10⁻⁶ | 11.5 | 2.0 | 4 | 1.1 |
| D2 | 1×10⁵ | 2.5 | 0.02 | 800 | 11.7 | 1.8 | 4 | 1.1 |
| D3 | 50 | 4×10⁴ | 0.004 | 5×10⁻⁶ | 13.1 | 1.5 | 96 | 1.1 |
| D4 | 1×10⁵ | 20 | 0.134 | 670 | 13.3 | 1.4 | 98 | 1.1 |

**Table 2**

| Sample | First reversible capacity | First Coulombic efficiency (%) | 100 cycles capacity retention rate (%) | Expansion rate of negative electrode plate after 50 cycles (%) |
|---|---|---|---|---|
| S1 | 1701 | 89.8 | 90.8 | 39.5 |
| S2 | 1695 | 89.8 | 92.1 | 38.7 |
| S3 | 1693 | 88.5 | 91.5 | 38.4 |
| S4 | 1645 | 87.1 | 89.6 | 37.5 |
| S5 | 1634 | 87.0 | 89.3 | 40.1 |
| S6 | 1598 | 88.7 | 90.7 | 39.5 |
| S7 | 1593 | 88.8 | 91.4 | 38.9 |
| S8 | 1593 | 87.5 | 91.0 | 38.4 |
| S9 | 1525 | 86.2 | 87.9 | 38.6 |
| S10 | 1516 | 86.0 | 87.7 | 39.9 |
| S11 | 1688 | 88.8 | 90.7 | 38.2 |
| S12 | 1605 | 87.2 | 88.9 | 41.0 |
| S13 | 1692 | 89.4 | 87.9 | 41.9 |
| D1 | 1709 | 89.9 | 87.5 | 43.2 |
| D2 | 1593 | 85.3 | 86.9 | 40.7 |
| D3 | 1602 | 88.8 | 86.9 | 45.3 |
| D4 | 1489 | 84.6 | 85.4 | 38.9 |

According to the data in Tables 1 to 2, a mass content of the alkali metal element, the alkaline earth metal element, and the oxygen element in the anode material satisfied the following relationship: 1×10⁻⁵ ≤ (B/A) × E ≤ 5×10². It was speculated that the reason might be that a silicate and a silicon oxide could be effectively controlled within an appropriate range, which could have a synergistic effect, alleviated the huge stress hedging during the cycling process, reduced the volume expansion of the anode material, improved the overall structural stability of the anode material, and enhanced the cycling stability of the anode material.

According to the test data of Example 1 to Example 5 and Comparative Example 1, it could be seen that the (B/A) × E of the anode material in Comparative Example 1 was too low, indicating that the A value exceeded the upper limit or the B value exceeded the lower limit. If the A value exceeded the upper limit, it indicated an excess of the alkali metal element in the anode material, and it was speculated that this might lead to an excess of a silicate of the alkali metal element in the anode material, resulting in a decrease in the mechanical strength of the anode material, a deterioration in the effect of inhibiting expansion, and a decrease in cycle performance; and if the B value exceeded the lower limit, it indicated that there was too few alkaline earth metal element in the anode material, and it was speculated that this might lead to a low amount of a silicate of the alkaline earth metal element in the anode material, resulting in low mechanical strength and unstable structure of the anode material, with little effect on suppressing volume expansion during cycling process.

Compared to Examples 1 to 5, the (B/A) × E of the anode material in Comparative Example 2 was too high, indicating that the B value exceeded the upper limit and there was an excess of the alkaline earth metal element in the anode material, and it was speculated that this might lead to an excessive amount of a silicate of the alkaline earth metal element in the anode material, resulting in high hardness and reduced elasticity of the anode material, which was also not conducive to alleviating cyclic expansion stress hedging and deteriorating cycle performance; and in addition, excessive alkaline earth metal oxides could lead to a decrease in the content of the silicon-based active substance in the anode material, which could reduce the capacity and first Coulombic efficiency of the anode material.

According to the test data of Example 6 to Example 10 and Comparative Example 3, it could be seen that the (B/A) × E of the anode material in Comparative Example 3 was too low, indicating that the A value exceeded the upper limit or the E value exceeded the lower limit. If the A value exceeded the upper limit, it indicated that there was an excess of the alkali metal element in the anode material, and it was speculated that this might lead to an excess of a silicate of the alkali metal element in the anode material, resulting in a decrease in the mechanical strength of the anode material, a deterioration in the effect of suppressing expansion, and a deterioration in cycle performance; and in addition, a low E value indicated that an oxide layer on the surface of the silicon-based active substance was too thin, which increased the side reactions between the silicon-based active substance and the electrolyte, and also led to significant volume expansion of the material during cycling process, resulting in poor cycle performance.

According to the test data of Example 6 to Example 10 and Comparative Example 4, it could be seen that the (B/A) × E of the anode material in Comparative Example 4 was too high, indicating an excess of the alkaline earth metal element in the anode material or the E value exceeding the upper limit, and it was speculated that an excess of the alkaline earth metal element in the anode material might lead to an excessive amount of a silicate of the alkaline earth metal element, resulting in high hardness and reduced elasticity of the anode material, which was not conducive to relieving stress hedging and deteriorating cycle and expansion performance. In addition, the E value exceeding the upper limit indicated a high oxygen content in the anode material, an increase in an inactive silicon oxide, a decrease in the first reversible capacity of the anode material, and a decrease in the first Coulombic efficiency.

The applicant declared that the detailed process equipment and process flow of the present application were illustrated through the above-mentioned examples, but the present application was not limited to the above-mentioned detailed process equipment and process flow, that was, it did not mean that the present application must rely on the above-mentioned detailed process equipment and process flow to be implemented. Technicians in the relevant technical field should understand that any improvement to the present application, equivalent substitution of various raw materials and addition of auxiliary components in the product of the present application, selection of specific methods, etc., all fall within the scope of protection and disclosure of the present application.

## Claims

1. An anode material comprising a carbon matrix and a silicon-based active substance; the anode material contains an alkali metal element, an alkaline earth metal element, and an oxygen element, the alkali metal element comprises Na and/or K, and the alkaline earth metal element comprises Mg and/or Ca;
a mass content of the alkali metal element is A ppm, a mass content of the alkaline earth metal element is B ppm, and a mass content of the oxygen element is E; and
the anode material satisfies the following relationship: 1 ×10⁻⁵ ≤ (B/A) × E ≤ 5×10².

2. The anode material according to claim 1, wherein the anode material satisfies at least one of the following technical features:
(1) the mass content of the alkali metal element is A ppm, 1 ≤ A ≤ 5000;
(2) the mass content of the alkaline earth metal element is B ppm, 5 ≤ B ≤ 5000; and
(3) the mass content of the oxygen element is E, 0.005 ≤ E ≤ 0.1.

3. The anode material according to claim 1 or 2, wherein the anode material satisfies at least one of the following technical features:
(1) the existence form of the alkali metal element comprises a silicate of alkali metal; and
(2) the existence form of the alkaline earth metal element comprises a silicate of alkaline earth metal.

4. The anode material according to claim 3, wherein the carbon matrix comprises at least one of hard carbon, soft carbon, graphite, mesophase carbon microsphere, activated carbon, porous carbon, mesoporous carbon, and carbon gel.

5. The anode material according to claim 3, wherein the silicon-based active substance comprises at least one of elemental silicon, silicon oxide, silicon alloy, and silicon carbon composite.

6. The anode material according to claim 5, wherein the anode material satisfies at least one of the following technical features:
(1) the silicon-based active substance comprises elemental silicon, the elemental silicon comprises crystalline silicon and/or amorphous silicon;
(2) the silicon-based active substance comprises silicon oxide, the silicon oxide comprises silicon element and oxygen element, and an atomic ratio of the silicon element to the oxygen element is 0 to 2 and does not comprise 0;
(3) the silicon-based active substance comprises silicon oxide, and a chemical formula of the silicon oxide is SiOₓ, wherein 0 < x ≤ 2; and
(4) the silicon-based active substance comprises silicon alloy, and the silicon alloy comprises at least one of silicon lithium alloy, silicon magnesium alloy, and silicon nickel alloy.

7. The anode material according to claim 5, wherein an average particle size of the silicon-based active substance is 0.1 nm to 500 nm.

8. The anode material according to claim 5, wherein a mass content of silicon element in the silicon-based active substance is ≥ 99%.

9. The anode material according to claim 1, wherein the anode material satisfies at least one of the following technical features:
(1) a median particle size D₅₀ of the anode material is ≤ 15 µm; and
(2) a specific surface area of the anode material is ≤ 5 m²/g.

10. The anode material according to claim 9, wherein at least a portion of the surface of the silicon-based active substance in the anode material is coated with a carbon layer.

11. The anode material according to claim 10, wherein the carbon layer comprises at least one of graphitic carbon and amorphous carbon.

12. The anode material according to claim 1 or 2, wherein a mass ratio of silicon element and carbon element in the anode material is (0.16 to 2):1.

13. A negative electrode plate comprising the anode material according to any one of claims 1 to 12.

14. A battery, wherein the battery comprises the anode material according to any one of claims 1 to 12 or the negative electrode plate according to claim 13.
